(19)

Europäisches
Patentamt
European
Patent Office
Office européen
des brevets

(11) **EP 1 918 821 A2**

(12) **EUROPEAN PATENT APPLICATION**

(43) Date of publication:
**07.05.2008 Bulletin 2008/19**

(51) Int Cl.:
***G06F 11/36*** (2006.01)

(21) Application number: **07021186.7**

(22) Date of filing: **30.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **31.10.2006 US 855364 P
19.10.2007 US 875364**

(71) Applicant: **Fujitsu Ltd.
Kawasaki-shi, Kanagawa 211-8588 (JP)**

(72) Inventors:
• **Stergiou, Stergios
Sunnyvale, CA 94085 (US)**
• **Jain, Jawahar
Sunnyvale, CA 94085 (US)**

(74) Representative: **HOFFMANN EITLE
Patent- und Rechtsanwälte
Arabellastrasse 4
81925 München (DE)**

(54) **Disjunctive transition relation decomposition based verification**

(57)    A method and system for building disjunctive transition relation decompositions of a system and obtaining reachable states from manipulation of the transition relation. Properties of the system may be verified by analyzing reachable states obtained with respect to a target specification of the system.

**EP 1 918 821 A2**

**Description**

CROSS-REFERENCE TO RELATED APPLICATION

This application is related to and claims the benefit of U.S. Serial No. 60/855,364, inventor Jawahar Jain, et al., entitled DISJUNCTIVE PARTITIONING OF TRANSITION RELATION BASED VERIFICATION, filed October 31, 2006, in the United States Patent and Trademark Office, the disclosure of which is incorporated herein by reference.

BACKGROUND

1. Field

The embodiments discussed herein are directed to hardware and software verification, and more particularly, disjunctive transition relation decomposition based verification.

2. Description of the Related Art

Verification generally deals with checking whether a software or hardware design satisfies a requirement with respect to a particular specification or property. A common approach to verification is checking properties of the design. One such approach is unbounded model checking of invariant properties of a system, which is generally performed by conducting a reachability analysis. This approach is directed to finding all the states reachable from an initial state and checking whether the invariant properties are satisfied in the reachable states. However, this and other similar approaches experience the so-called state explosion problem, especially in representing large state sets, because sizes of binary decision diagrams used to represent the reached states and the transition relation become exponentially large. Reachability analysis is typically performed using transition relation based image computation, and an algorithm based on a fix-point computation that performs a breadth-first traversal of states. Despite use of carefully designed approaches, image computation generally leads to state space blow up and remains as a problem in the industry.

Use of partitioned transition relations has been proposed where, instead of using a monolithic binary decision diagram representation of the transition relation, transition relations of different latches are kept as separate binary decision diagrams, or clustered into small groups of latches that are then conjoined during image computation. Although maintaining the transition relations as an implicitly conjoined vector of binary decision diagrams may address the problem of constructing the transition relations, unpredictability during intermediate conjunctions causes the binary decision diagrams of intermediate operations to be much larger than the outcome of the image computation. In addition, since existential quantifications do not distribute over the conjunction vectors, predictability of operations is at best limited.

Since use of partitioned transition relation components relates to conjoined state sets, these solutions do not address the central problem associated with binary decision diagrams and merely postpones the explosion problem until computations of images. This is because when the reached states set becomes sufficiently complex, intermediate binary decision diagram results tend to be in orders of magnitude larger than corresponding images. Large intermediate results of the conjunctions may even occur when the final result eventually drops to a manageable size. Approaches that use transition relations represented as a conjunction or in a "chained" manner also require analysis of all the conjoined transition relations at the same time, and thus do not provide a technique for independent analysis of the transition relations.

As design sizes and complexity of systems increases, verification has become the bottleneck in modern design flows. Another disadvantage of typical verification approaches is the space required to store representation structures of state sets.

In addition to requiring use of a large memory space, typical techniques for computing valid state sets require all reachable states to be computed through use of conjunctions of Boolean functions representing state sets and state transitions. Since all image computation sub-operations need to be completed before new states are extracted, these techniques do not provide analysis or verification during the computation. That is, each conjunction can only be performed after a preceding one is completed, thus there exists no mechanism to extract new states until image computation is complete.

Computing valid states of a finite state machine is essential to verifying correctness of properties. Typically, valid state sets are computed by performing extensive circuit simulations, since a property can be invalidated if an invalid state is detected during simulation. However, validating a property through simulation is not possible, since the set of valid states is typically too large to explicitly enumerate. Although typical digital circuit verification has been performed by extensive simulations, their performance is unsatisfactory because simulations do not provide full coverage and only check a small portion of possible stimulus, leaving bugs/problems undetected.

Although various techniques of computing valid states have been developed, typical verification techniques have various disadvantages in performance. Therefore, there is a need for a technique enabling scaleable and efficient hardware and software verification.

SUMMARY

A system and method are disclosed to build decompositions of transition relation of a system, convert the decompositions to disjunctive transition relation representation and obtain reachable states from manipulation of the transition relation.

The disclosed method includes constructing disjunctive transition relation decomposition representation of a circuit and obtaining reachable states of the circuit by manipulating the transition relation and verifying whether the reachable states satisfy a target property of the system.

The method includes defining a function of the transition relation having variables that implicitly perform bit relation conjunctions, disjunctively decomposing the function until each component is below a threshold, and performing existential quantification until each of the variables is removed. The system and method disclosed verify properties of the system by analyzing the reachable states with respect to a target specification of the system.

These together with other aspects and advantages which will be subsequently apparent, reside in the details of construction and operation as more fully hereinafter described and claimed, reference being had to the accompanying drawings forming a part hereof, wherein like numerals refer to like parts throughout.

BRIEF DESCRIPTION OF THE DRAWINGS

Figure 1 is a block diagram of a system configured to perform disjunctive transition relation decomposition based verification.
Figure 2 is a flowchart for verifying properties of a system using disjunctive transition relation decompositions of the system.
Figure 3 is a binary tree representation of a decomposition algorithm.
Figure 4 is a diagram illustrating disjunctive decomposition of a transition relation into components.
Figure 5 is a diagram illustrating existential quantification of variables contained in a decomposition algorithm.
Figure 6 is a diagram illustrating image computation based on disjunctive transition relation decomposition.

DETAILED DESCRIPTION OF THE EMBODIMENTS

Reference will now be made in detail to the present embodiments discussed herein, examples of which are illustrated in the accompanying drawings, wherein like reference numerals refer to the like elements throughout. The embodiments are described below to explain the disclosed system and method by referring to the figures. It will nevertheless be understood that no limitation of the scope is thereby intended, such alterations and further modifications in the illustrated device, and such further applications of the principles as illustrated therein being contemplated as would normally occur to one skilled in the art to which the embodiments relate.

To overcome drawbacks of existing verification and reachability analysis techniques, the disclosed system and method constructs disjunctive transition relation (TR) decompositions of a system that enables efficient and flexible reachability analysis and verification. The subject of verification may be a program, software, one or more hardware components of a system or the system in entirety. Reachability analysis refers to both forward reachability where image computation is implemented to initial states of a program or machine until a fixed point is reached, and backward reachability where image computation is applied to the complement of state sets obtained from properties, until invalidating states thereof are obtained. An initial state set refers to any set including reset state set or some other particular state set, start or some particular state, etc., using which reachable states are to be computed. Image computation in the case of states based analysis refers to formulation of a range or value from a given function.

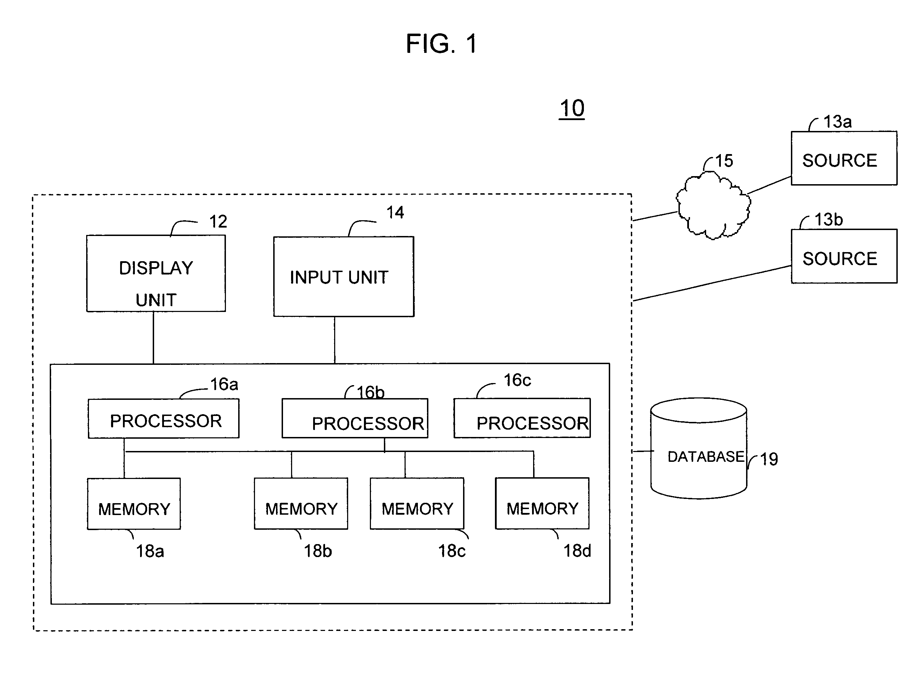

A system configured to perform verification based on disjunctive transition relation decompositions is illustrated in Fig. 1. As shown in Fig. 1, the verifier 10 may include a display unit 12 and an input unit 14. The display unit 12 may provide information with respect to verification and/or reachability analysis pertaining to a system under verification including but not limited to a set of states, an initial or a current state, verification result(s) indicating whether requirement (s) or target specification of the system have been met, or any other data related to verification and/or reachability analysis of the system.

The input unit 14 enables input of a variable, parameter, or property of a system under verification to the verifier 10. For example, a user may input design information pertaining to a system to be verified using the input unit 14. However, the verifier 10 is not limited to a particular type of input and may include a hardware description language, such as Verilog, that provides design information of the system under verification. The verifier 10 may also include an open source tool translating design information of a system provided via the input unit 14 into functions. Further, coverage information identifying a point at which obtaining states of a system under verification is determined to be complete may be specified using the input unit 14. For example, for semiformal verifications, an over approximated set size of reachable and/or unreachable states of a system may be specified such that the verification is terminated when the specified set is obtained.

The verifier 10 may be connected with source 13a via a network 15 and source 13b and obtain design, specification or property information of a system (or program) under verification. For example, the verifier 10 may be provided with hardware properties of a system from a designer of the system via the network 15. The verifier 10 may also be connected with a database 19 configured to store data pertaining to verification including but not limited to a binary decision diagram (BDD) containing disjunctive transition relation decomposition representation of a system under verification, reachable states of the system, target specification of the system, etc. Although the database 19 is illustrated in Fig. 1 as being connected with the verifier 10, the database may be integrated as a component of the verifier 10.

The verifier 10 includes processors 16 and memories 18. While Fig. 1 illustrates multiple processors 16 and memories 18, the disclosed system is not limited to a particular number of memories or processors. For example, a multi-core processor with shared memory and/or distributed memory architecture may be provided to the verifier 10. The processors 16 illustrated in Fig. 1 refer to any component capable of receiving instructions and processing data, and the memories 18 may be any type of device that is configured to record or store information.

The verifier 10 is configured to determine valid state sets of a system (or program) under verification and verify target specification of the system. Determination of valid states via the verifier 10 includes computing a set of all states that are reachable from initial states in the context of Symbolic Model Checking. Using this approach, state sets and state transitions are represented as Boolean functions that may be maintained as Binary Decision Diagrams, and a set of initial (reset) states is iteratively augmented with sets of new states until all reachable states have been computed.

The core of reachability analysis is image computation operation which, presented with a set of states $S_i$, detects all states $S_{i+1}$ that are reachable from $S_i$ in the next clock cycle. Typically, a provided invariant property $P(g)$ is checked during a reachability analysis, where the invariant property "passes" if the total reachable states is $R(g) \subset P(g)$, and fails otherwise. During reachaiblity analysis, if there are unreachable states within the set of states obtained, there may be an error in the system under verification. Similarly, an error may also be determined to exist when negation of the set results in any of the reachable states. Another way to verify a system is to look at the actual image computations one at a time as properties to be verified could have time semantics. For example, if a value is true at clock cycle $i$, another value is true at clock cycle $i+5$. Although certain examples of reachability analysis are mentioned, the present invention is not limited to any particular technique for conducting reachability analysis and may also use languages to verify properties such as linear temporal logic (LTL), computational tree logic (CTL), etc.

A synchronous circuit, comprising $k$ latches and $r$ inputs is defined by the set $S_0$ of reset states and the transition function $\delta : \{0, 1\}^k \times \{0, 1\}^r \mapsto \{0, 1\}^k$ that encapsulates the $k$ next state functions $\delta_i: \{0, 1\}^k \times \{0, 1\}^m \mapsto \{0, 1\}$ of its memory elements.

The transition relation TR($\upsilon'$, $\overleftrightarrow{\upsilon}'$, $\overleftrightarrow{p}$) may be formed as a Boolean function, where

$$TR(\vec{v}; \vec{v}'; \vec{p}) = 1 \text{ iff } \delta(\vec{v}; \vec{p}) = \vec{v}'$$

and is computed as

$$TR(\vec{v}; \vec{v}'; \vec{p}) = \bigwedge_i (\vec{v}'_i \oplus \delta_i(\vec{v}; \vec{p})). \qquad (1)$$

Functions $br_i(v'_i; \vec{v}; \vec{p}) = \vec{v}'_i \oplus \delta_i(\vec{v}; \vec{p})$ are the bit relations of the circuit.

Operating on the state sat $S_i$, the image computation is

$$S_{i+1}(\vec{v}) = \exists \vec{p}, \vec{v}'. TR(\vec{v}'; \vec{v}; \vec{p}) \wedge S_i(\vec{v}') \qquad (2)$$

and the set of reachable states $S$ is

$$S(\vec{v}) = \bigvee_{i=0}^{\infty} S_i(\vec{v}) \qquad\qquad (3)$$

As implied from equation 1 discussed above, monolithic transition relations are likely to blow-up even for relatively small bit relations. The advantages of disjunctive transition relation decompositions is apparent if the transition relation $TR(\upsilon'; \overleftrightarrow{\upsilon}; \overleftrightarrow{p})$ formed as a Boolean function is decomposed according to the following:

$$TR_1(\vec{v}; \vec{v}'; \vec{p}) \vee TR_2(\vec{v}; \vec{v}'; \vec{p}) \vee TR_3(\vec{v}; \vec{v}'; \vec{p})$$

and the image may be computed as follows:

$$
\begin{aligned}
S_{i+1}(\vec{v'}) = \;&\exists \vec{p}, \vec{v}.(TR_1(\vec{v}; \vec{v'}; \vec{p}) \wedge S_i(\vec{v})) \; \vee \\
&\exists \vec{p}, \vec{v}.(TR_2(\vec{v}; \upsilon'; \vec{p}) \wedge S_i(\vec{v})) \; \vee \\
&\exists \vec{p}, \vec{v}.(TR_3(\vec{v}; \vec{v'}; \vec{p}) \wedge S_i(\vec{v}))
\end{aligned}
$$

Image computation of each of the components of the transition relation can then be computed independently since existential quantifications distribute over the disjunctions. Further, it is not necessary to quantify input variables $\overleftrightarrow{p}$ at each image computation because such computation may be performed after the decomposition has been obtained. Specifically, pre-computation may be implemented in accordance with the following:

$$TR_i'(\vec{v}; \vec{v'}) = \exists p.TR_i(\vec{v}; \vec{v'}; \vec{p})$$

where the image computation is represented as follows:

$$
\begin{aligned}
S_{i+1}(\vec{v'}) = \;&\exists \vec{v} \, (TR_1'(\vec{v}; \vec{v'}) \wedge S_i(\vec{v})) \; \vee \\
&\exists \vec{v}.(TR_2'(\vec{v}; \vec{v'}) \wedge S_i(\vec{v})) \; \vee \\
&\exists \vec{v}.(TR_3'(\vec{v}; \vec{v'}) \wedge S_i(\vec{v}))
\end{aligned}
$$

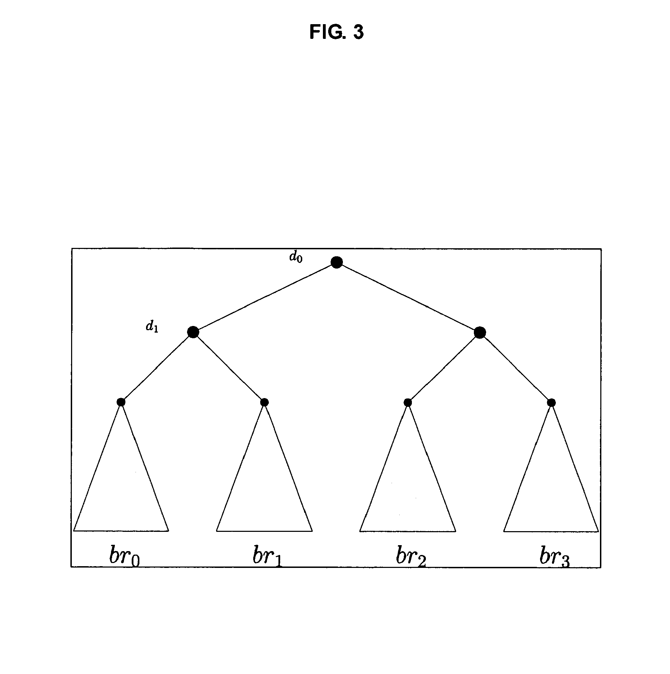

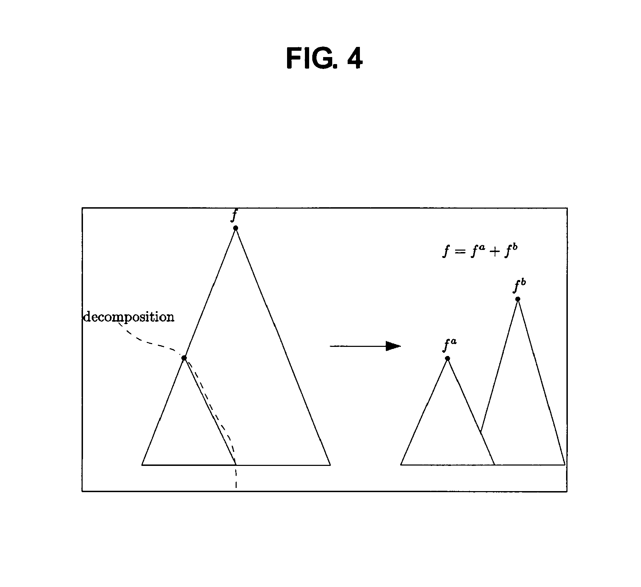

Operation of obtaining decompositions of the transition relation of a system is explained in further detail below with respect to Figs. 3 and 4.

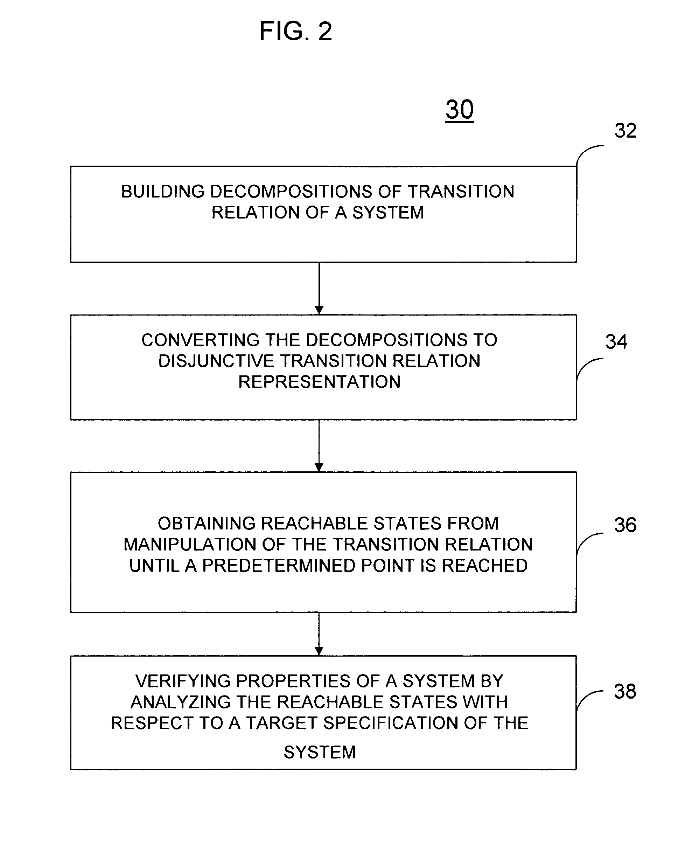

An exemplary process 30 for verifying a property of a system using disjunctive transition relation decompositions is illustrated in Fig. 2. As shown in Fig. 2, process 30 begins by building 32 decompositions of translation relation of a system. Since creating a monolithic TR (equation 1) likely results in a blow-up, the verifier 10 (Fig. 1) builds decompositions of transition relation of a system under verification. Building 32 the decompositions includes constructing an auxiliary function $TR^a$ that captures semantics of transition relation of the system under verification while remaining manipulable, and decomposing it into components such as $TR_i^0$. To construct the auxiliary function $TR^a$, variables that form a full binary tree whose leaves are the bit relations are introduced. An exemplary construction of the function $TR^a$ is explained in further detail below with respect to Fig. 3.

The function $TR^a$ has conjunctions implicitly represented and having total size which may be at most equal to the sum of the sizes of the bit relations. In a preferred embodiment, a size of the decompositions is determined based on achieving a balance between each of the decomposition components such that efficient image computation can be implemented across each of the decomposition components. For example, an auxiliary TR function may be constructed to represent TR decomposition components having relatively equivalent number of nodes, instead of having one TR with 1 million nodes and another with 1.9 million nodes. In addition, a decomposition component is not limited to representing a set of states exclusive of states represented by another decomposition component(s), instead sets represented by the components may result in an overlap.

For relatively small and non-complex circuits, the building 32 may include building a monolithic transition representation, disjunctively decomposing a single binary decision diagram and iteratively decompose the transition relation.

Subsequent to building 32 decompositions of the translation relation, process 30 continues by conversion 34 of the decompositions to disjunctive translation relation representation. Using the same example as above, a number of auxiliary variables implicitly performing bit relation conjunctions are introduced to the function TR$^a$ constructed. During the conversion 34, the function TR$^a$ will be iteratively disjunctively decomposed until the size of all obtained components drops below a provided threshold. Meaning, the decompositions built are represented in such a way that the result forms a disjunctive decomposition TR$^a$. An exemplary decomposition of the function TR$^a$ is explained in further detail below.

After converting 34 the decompositions to disjunctive transition relation representation, process 30 proceeds to obtaining 36 reachable states from manipulation of the translation relation until a predetermined point is reached. Reachable states set may be obtained 36 by iteratively performing image computations with each of the components of the disjunction until a fixed point is reached. While an order in which the components are chosen is not crucial for the correctness of the analysis, the impact of performing image computation with each of the components on performance is significant. However, an order of the components for image computation schedules may be specified for purposes of optimizing image computation.

The predetermined point at which obtaining the reachable states is terminated, for example, may be a point at which a given number of state sets have been obtained based on an approximated number of states provided by a designer of the system. The predetermined point may also be determined by selectively applying existential quantification to the disjunctive TR decompositions for providing semiformal verification results. Although a few examples are provided for determining a point at which obtaining the reachable states is terminated, the present invention is not limited to any particular determination and various factors including verifier and/or designer needs may be taken into consideration.

Subsequent to obtaining 36 reachable states, process 30 proceeds to verifying 38 properties of a system by analyzing the reachable states with respect to a target specification of the system. For example, properties of the system are compared against formal specification requirement of the system to verify that the system implementation satisfies the specification. Target specification of the system may be obtained from the manufacturer or designer of the system, and/or manually entered by a user requesting the verification. Although Fig. 2 illustrates obtaining 36 reachable states and verifying 38 properties as being executed sequentially, the disclosed invention is not limited to a particular sequential order. For example, reachable states may be obtained 36 for a single image computation, verify 38 of properties of the system and repeat until a predetermined point (i.e., a fixed point) is reached.

Figure 3 illustrates a binary tree of a decomposition algorithm having conjunctions implicitly represented. As shown in Fig. 3, the binary tree is a full binary tree whose nodes have out-degrees of either 0 or 2 and represents a Boolean function. As mentioned above, building 32 decompositions of transition relation of a system (Fig. 2) includes constructing a function TR$^a$. To construct the function TR$^a$ which has conjunctions implicitly represented, log $k$ auxiliary variables $\overleftrightarrow{d}$ are introduced that precede input and state variables in the order. These variables form a full binary tree whose leaves are the bit relations. For example, let $\overleftrightarrow{d}$ be a vector of Boolean variables and $i \in$ N. Then $(\overleftrightarrow{d} = |i|)$ is defined as a product term on the variables of $\overleftrightarrow{d}$, with polarities obtained from the binary representation of i as in the following example:

$$\text{Let } \vec{d} = (d_4, d_3, d_2, d_1, d_0).\ \text{Then product term } (\vec{d} = [1101_2]) \text{ is defined as } \bar{d}_4 d_3 d_2 \bar{d}_1 d_0$$

Function TR$^a$ is defined as follows:

$$TR^a(\vec{v}, \vec{v'}, \vec{p}, \vec{d}) = \bigvee_{i=0}^{k-1} (\vec{d} = [i]) \wedge br_i(\vec{v'}; \vec{v}; \vec{p})$$

The above described function TR$^a$ maintains the following properties:

$$|TR^a(\vec{v}, \vec{v'}, \vec{p}, \vec{d})| \leq \sum_i |br_i(\vec{v'}; \vec{v}; \vec{p})|$$

$$TR(\vec{v}; \vec{v'}; \vec{p}) = \forall \vec{d}.TR^a(\vec{v}; \vec{v'}; \vec{p}; \vec{d})$$

Accordingly, function TR$^a$ provides the opportunity of manipulating the whole TR at once while maintaining a manageable size, which may be equivalent to the sum of the sizes of the bit relations. Essentially, the function TR$^a$ represents a complete binary tree where each level connected to a variable and its leaves are the bit relations br$_i$. As such, by constructing the function TR$^a$ without having to perform the multiplication, the size remains as big as the sum of the size of the functions. In a preferred embodiment, the conjunctions, implicitly encoded through variables $\overleftrightarrow{d}$, are deferred at a point after a disjunction has been obtained, but before the actual image computations are performed. Further, the cost of constructing TR$^a$ is negligible since the bit relations are usually already stored in the same BDD manager.

The implicit representation of the function TR$^a$ allows the multiplications to be done after the decomposition components have been built such that the representations do not become large.

Each decomposition component may be supplied to one of the processors 16 (Fig. 1) for conducting reachability analysis in association with the system under verification. While it is possible that not utilizing some of the components of the decomposition components may result in partial verification of a state set, it is possible that states generated from a decomposition component may overlap with another decomposition component and provide formal verification.

Fig. 4 illustrates disjunctive decomposition of transition relation into components. The verifier 10 (Fig. 1) may use any one or more of existing algorithms to decompose a given function f into at least two components. Using the same example discussed above, the function TR$^a$ may be decomposed into components using decomposition algorithms such as *DisjDecompA, DisjDecompB,* and other similar algorithms capable of decomposing a given function f into at least two parts.

Function TR$^a$ is iteratively disjunctively decomposed until a size of each component drops below a provided threshold. For example, given a user specified size threshold $S_{th}$, function TR$^a$ is iteratively disjunctively decomposed until all of its components have a size less than or equal to $S_{th}$. As such, at every iteration, the currently largest component is selected and decomposed into two parts using algorithms *DisjDecompA* and *DisjDecompB.* The smaller decomposition of the two is selected. While decomposition of the function TR$^a$ is described using the *DisjDecompA* and *DisjDecompB* algorithms, the present invention is not limited to any particular decomposition algorithm. For example, the well-known Shannon decomposition in the form of $(x_j f|x_f=1,_j f|_{xj}=0)$ may be used in a case other algorithms do not produce a desired disjunction.

As such, a set of functions $TR_i^0, i = 1,\ldots,l$ are obtained, where

$$TR^a(\vec{v}, \vec{v'}; \vec{p}; \vec{d}) = \bigvee_{i=1}^{l} TR_i^0(\vec{v}; \vec{v'}; \vec{p}; \vec{d})$$

In a preferred embodiment, both *DisjDecompA* and *DisjDecompB* are used for the decompositions, while the Shannon decomposition is utilized as a last resort since it is in most cases slow, especially when most of the variables in the support set of *f* are examined.

Further, a disjunction may be achieved by analyzing a structure of a graph and generating one or more partitioned ordered binary decision diagram (POBDD) of states of a system under verification.

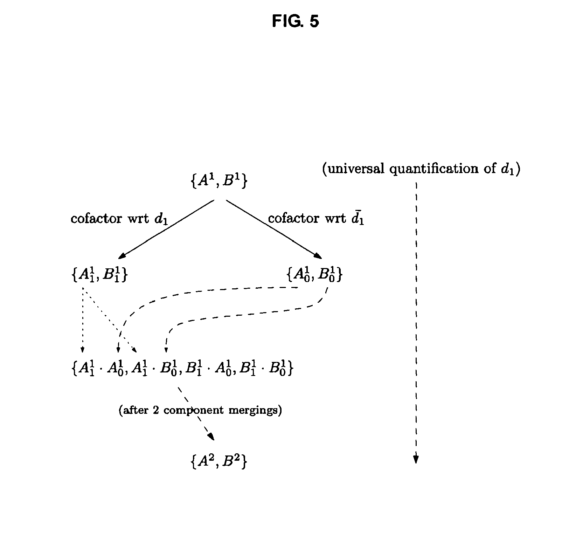

Fig. 5 illustrates quantification of auxiliary variables introduced when constructing the function TR$^a$. Since the auxiliary variables $\overleftrightarrow{d}$ still exist in the decomposition components, the variables are universally quantified, one at a time, in accordance with the following:

Definition 2.6. Let $\{L\}_1^n$ denote a set of functions $\{L_1, L_2, \ldots, L_n\}$, Then, $\{L\}_1^n|_j$ is defined as $\{L_1|_0, L_2|_0,\ldots, L_n|_0\}$

*Definition* 2.7. Let $\{L\}_1^{n_1}, \{M\}_1^{n_1}$ denote 2 Function sets. Then $\{L\}_i^{n_1} \times \{M\}_1^{n_1}$ is defined as the set of all pairwise conjunctions of functions $L_i, M_j$:

$$\{L_1 \wedge M_1, L_1 \wedge M_2, \ldots, L_2 \wedge M_1; \ldots, L_{n_1} \wedge M_{n_2}\}$$

A set of functions $\{C^j\}_1^{m'}$ is obtained as follows

$$\{C^j\}_1^{m'} = \{TR^j\}_1^{m}|_{d_j=1} \times \{TR^j\}_1^{m}|_{d_j=0}$$

The cardinality $m'$ of this set is at most $m^2$. At this stage, variable $d_j$ no longer exists in the support of the components in $\{C^j\}_1^{m'}$.

For example, if function TR^a has been decomposed into 3 components and 2 auxiliary variables were used for its construction. Then,

$$TR^a(\vec{v};\vec{v'};;d_0,d_1) = TR_1^0(\vec{v};\vec{v'};;d_0,d_1) \vee TR_2^0(\vec{v};\vec{v'};;d_0,d_1) \vee TR_3^0(\vec{v};\vec{v'};;d_0,d_1)$$
$$\{TR^0\}_1^3 = \{TR_1^0(\vec{v};\vec{v'};;d_0,d_1), TR_2^0(\vec{v};\vec{v'};;d_0,d_1), TR_3^0(\vec{v};\vec{v'};;d_0,d_1)\}$$

Moreover,

$$\{TR^0\}_1^3|_{d_0=1} = \{TR_1^0(\vec{v};\vec{v'};;1,d_1), TR_2^0(\vec{v};\vec{v'};;1,d_1), TR_3^0(\vec{v};\vec{v'};;1,d_1)\}$$
$$\{TR^0\}_1^3|_{d_0=0} = \{TR_1^0(\vec{v};\vec{v'};;0,d_1), TR_2^0(\vec{v};\vec{v'};;0,d_1), TR_3^0(\vec{v};\vec{v'};;0,d_1)\}$$

where some of the above functions may be 0. Finally represented as the following:

$$\{C^0\}_1^{m'} = \{TR_1^0(;;;1,d_1) \wedge TR_1^0(;;;0,d_1), \ldots, TR_3^0(;;;1,d_1) \wedge TR_3^0(;;;0,d_1)\}$$

where m' is equal to the number non-zero conjunctions and is at most 9.

Fig. 5 shows universal quantification variable $d_1$ from input set $\{A^1, B^1\}$ and variable $d_1$ no longer exists in the resulting set $\{A^2, B^2\}$. As discussed above, at this point variable $d_j$ is removed from the support set of the components while maintaining a disjunction. However, the number of components in the result might have increased from $m$ to $m^2$ in the worst case. In such a case, the number of components may need to be reduced before removing the remaining auxiliary variables.

The set $\{TR^{j+1}\}_1^m$ obtained directly from the components of set $\{C^j\}_1^{m'}$ by iteratively selecting two components in $\{C^j\}_1^{m'}$ with the smallest size and disjoin them. The selection is performed such that the overall decomposition remains as balanced as possible. This operation is repeated until m components remain. Selecting the smallest components to disjoin tends to keep the components of the intermediate lists well balanced, and after all variables $\vec{d}$ have been quantified away, the desired disjunctive TR decomposition is obtained. An exemplary quantifications algorithm is shown in Appendix 2.

The disclosed decomposition includes constructing function TR^a (Fig. 3) where auxiliary variables are introduced to implicitly perform the bit relation conjunctions, the TR^a (Fig. 4) is iteratively disjunctively decomposed until the size of all the obtained components drops below a provided threshold, and the auxiliary variables that are still present in the components are universally quantified away (Fig. 5). The disclosed decomposition may be implemented using an algorithm parameterized by a threshold size for the components and a desired number of components as depicted in Appendix 3.

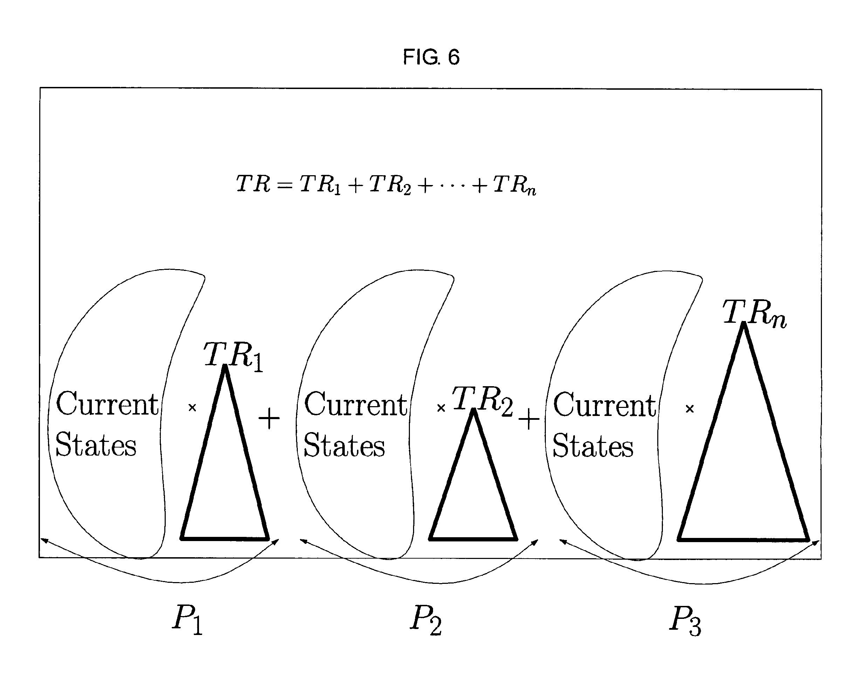

Fig. 6 illustrates manipulation of transition relation of a system under verification. As illustrated in Fig. 6, each of the decomposition components $TR_1$, $TR_2$ ... $TR_n$ are multiplied with the current state set to produce the whole bit for the next bit. Image computation may be applied to each of the decomposition components of the function TR where each TR component ($TR_1$, $TR_2$... $TR_n$) are used to implement the image computation. While the TR components are functions which may be used to compute the image, a particular component's image (i.e., $TR_2$) is referred to a sub-image since this component is part of the image of the large TR.

In addition, if a size of a component is larger than a predetermined threshold, the component may be discarded. For example, if P3 illustrated in Fig. 6 exceeds the threshold, the component may be discarded, which may result in a semi-formal verification if the component exclusively represented certain states, or formal if the same states are also contained in another component.

Accordingly, if states need to be computed at $i$+1, given a set of states at clock cycle $i$, one component may compute a part of a set, another may compute another part of the set, etc., and union of the states (performed in the OR variation) results in the next state exactly.

As illustrated in Fig. 2, reachable states set may be obtained by iteratively performing image computations with each of the components of the disjunction until a fixed point is reached. The order of the components for image computation schedules may be specified for purposes of optimizing image computation. If one considers how time advances in such a schedule from the viewpoint of currently reachable states set, at time instance $t = 0$, set $S_o$ comprises the initial states. Time does not advance whenever set $S_i$ is read and advances by one unit whenever new states are submitted. If components of the obtained disjunctive TR are $TR_j$, $j = 1...m$, where $IC_{i, k}$, denotes the image computation operation on state set $S_i$ with component $TR_k$ and $\{IC_{i, k}\}$, he reachable states obtained. A sequence of $IC$ operations uniquely defines a reachability analysis schedule.

The disclosed verifier 10 (Fig. 1) may implement various types of scheduling pertaining to image computations of the decomposition components including but not limited to a sequential schedule, a threaded schedule, synchronized threaded schedule, etc.

For example, if $\pi(j)$ is a permutation on the indices of the $TR_j$ components, the sequential schedule may be as follows:

$$IC_{0,\pi(1)}, IC_{1,\pi(2)}, \ldots, IC_{m-1,\pi(m)}, IC_{m,\pi(1)}, \ldots$$

Although the sequential schedule does not allow for parallelism extraction since each IC operates on the state set that immediately precedes it and is therefore more suitable for single CPU systems, the schedule has a great potential of reducing a number of image computations necessary to reach a fix-point.

The threaded schedule may be implemented based on a restriction where for every operation pair $IC_{\alpha,k}$, $IC_{\beta,k}$, where $IC_{\beta,k}$ appears at position j and $IC_{\alpha,k}$ appears at position $i<j$ in the schedule, it holds $\beta \geq i$. This restriction prevents a scheduler from maintaining more than one active image computation per TR component at any time. Further, the threaded schedule allows for significant parallelism extraction, since m image computations can be active at any given time. Preferably, the schedule corresponds to having m threads, one for each of the m components of the TR, where each thread computes the image of a common pool of states S, as soon as S is updated from any other thread.

The synchronized threaded schedule introduces an additional restriction in addition to the restriction discussed in relation to the threaded Schedule. Specifically, every subsequence $(t \cdot m+1, \ldots, (t+1) \cdot m)$ of m operations in the schedule ($t \in$ N) should not contain two operations $IC_{t2,t1} IC_{12,k}$. Although this restriction reduces the available parallelism, it allows for a more controlled application of the image computation operations. Further, the synchronized threaded schedule guarantees that during the $t$-th subsequence, the system will produce at least the reached states of the $t$-th image computation of a conjunctive approach such as IWLS'95. This schedule technique also computes the reachable states in a breadth-first manner without imposing any additional unnecessary restrictions.

The disclosed system and method are especially beneficial for hard verification cases involving a system or program with complex properties and circuit design by constructing a function that acts as a well behaved trajectory.

Accordingly, the method provides a symbolic representation describing all possible states that are reachable in a clock cycle from all initial set of states provided. The method includes constructing a function to compute reachable states set of a system, where the transition relation is disjunctively decomposed by performing a limited number of bit relation conjunctions once before all the image computations and in a controlled manner. The bit relations that are supplied to the disclosed system can be seen as a fine-grained conjunctive decomposition. In fact, the algorithm developed essentially transforms any provided conjunction into a disjunction.

The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

## Claims

1. A method, comprising:

   building decompositions of transition relation of a system and converting the decompositions to disjunctive transition relation representation;
   obtaining reachable states from manipulation of the transition relation until a predetermined point is reached; and

verifying properties of the system by analyzing the reachable states with respect to a target specification of the system.

2. The method according to claim 1, wherein a size of each of component of the decompositions is below a predetermined threshold.

3. The method according to claim 2, wherein existential quantification is performed using the decompositions before the predetermined point of image computation is reached.

4. The method according to claim 1, wherein data of the decompositions of the transition relation, the reachable states and the properties of the system are stored in a binary decision diagram.

5. The method according to claim 1, wherein said predetermined point is when the reachable states obtained converge.

6. The method according to claim 1, wherein one of the decompositions is manipulated until the predetermined point is reached.

7. The method according to claim 1, wherein said verifying of the properties is performed in parallel.

8. The method according to claim 7, wherein said verifying is performed by multiple processors.

9. The method according to claim 1, comprising:

   providing a set of states of the system to be analyzed, and
   determining said predetermined point is reached upon analyzing the set of states provided.

10. The method according to claim 1, comprising:

    performing image computation of the decompositions independently.

11. The method according to claim 10, wherein the image computation is performed until a fixed point is reached.

12. The method according to claim 10, comprising:

    extracting partial state set of the system during said image computation.

13. The method according to claim 10, wherein independent variable quantification is performed during said image computation.

14. A method of verification, comprising:

    constructing disjunctive transition relation decomposition representation of a circuit; and
    obtaining reachable states of the circuit by manipulating the transition relation and verifying whether the reachable states satisfy a target property of the system.

15. The method according to claim 14, said constructing comprises:

    defining a function of the transition relation having variables that implicitly perform bit relation conjunctions;
    disjunctively decomposing said function until each component is below a threshold; and
    performing existential quantification until each of the variables is removed.

16. The method according to claim 15, wherein the reachable states are obtained until an approximated set of states provided by a designer of the circuit is reached.

17. A verifier, comprising:

    an input unit for entering an initial state of a system; and
    at least one processor for building disjunctive transition relation decomposition representation of the system, and verifying properties of the system by analyzing reachable states of the system with respect to a target specification of the system.

18. A computer readable storage for controlling a computer having a data structure comprising a binary decision diagram containing disjunctive transition relation decomposition representation of a system, a state set of the system, and target specification of the system.

19. A computer readable storage according to claim 18, wherein the data structure contains an implicit representation of state sets of the system that are detected as reachable.

20. A computer readable medium embodying a program for causing a computer to execute operations, comprising:

building decompositions of the transition relation of a system and converting the decompositions to disjunctive transition relation representation;
obtaining reachable states from manipulation of the transition relation until a predetermined point is reached; and verifying properties of the system by analyzing the reachable states with respect to a target specification of the system.

# FIG. 1

<u>10</u>

EP 1 918 821 A2

# FIG. 2

<u>30</u>

BUILDING DECOMPOSITIONS OF TRANSITION RELATION OF A SYSTEM — 32

CONVERTING THE DECOMPOSITIONS TO DISJUNCTIVE TRANSITION RELATION REPRESENTATION — 34

OBTAINING REACHABLE STATES FROM MANIPULATION OF THE TRANSITION RELATION UNTIL A PREDETERMINED POINT IS REACHED — 36

VERIFYING PROPERTIES OF A SYSTEM BY ANALYZING THE REACHABLE STATES WITH RESPECT TO A TARGET SPECIFICATION OF THE SYSTEM — 38

**FIG. 3**

EP 1 918 821 A2

# FIG. 4

$f = f^a + f^b$

decomposition

**FIG. 5**

$\{A^1, B^1\}$

(universal quantification of $d_1$)

cofactor wrt $d_1$          cofactor wrt $\bar{d}_1$

$\{A^1_1, B^1_1\}$               $\{A^1_0, B^1_0\}$

$\{A^1_1 \cdot A^1_0, A^1_1 \cdot B^1_0, B^1_1 \cdot A^1_0, B^1_1 \cdot B^1_0\}$

(after 2 component mergings)

$\{A^2, B^2\}$

FIG. 6

$$TR = TR_1 + TR_2 + \cdots + TR_n$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60855364 B